(19) Europäisches Patentamt / European Patent Office / Office européen des brevets

(11) **EP 4 592 915 B1**

(12) **EUROPEAN PATENT SPECIFICATION**

(45) Date of publication and mention
of the grant of the patent:
**31.12.2025 Bulletin 2026/01**

(21) Application number: **25152711.5**

(22) Date of filing: **20.01.2025**

(51) International Patent Classification (IPC):
*G06Q 10/02* (2012.01)    *G05B 23/02* (2006.01)
*G06Q 10/047* (2023.01)    *G06Q 10/0631* (2023.01)
*G06Q 50/40* (2024.01)

(52) Cooperative Patent Classification (CPC):
**G06Q 50/40; G06Q 10/025; G06Q 10/047;
G06Q 10/06312;** G05B 23/0294; G05B 2219/45071

(54) **STOCHASTIC MINPLUS WITH STATE (SMS) AGENT-BASED APPROACH FOR INLINE RECOVERY OF AIRLINE OPERATIONS**

STOCHASTISCHER MINPLUS MIT ZUSTANDS (SMS)-AGENTBASIERTEM ANSATZ ZUR INLINE-WIEDERHERSTELLUNG VON FLUGLINIENOPERATIONEN

MINPLUS STOCHASTIQUE AVEC APPROCHE BASÉE SUR UN AGENT D'ÉTAT (SMS) POUR LA RÉCUPÉRATION EN LIGNE D'OPÉRATIONS AÉRIENNES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **23.01.2024 IN 202421004633**

(43) Date of publication of application:
**30.07.2025 Bulletin 2025/31**

(73) Proprietor: **Tata Consultancy Services Limited
Maharashtra (IN)**

(72) Inventors:
• **SURIYANARAYANAN, Ramasubramanian
600113 Chennai, Tamil Nadu (IN)**
• **CHATI, Yashovardhan Sushil
560066 Bangalore, Karnataka (IN)**
• **VASAN, Arunchandar
600113 Chennai, Tamil Nadu (IN)**

(74) Representative: **Goddar, Heinz J.
Boehmert & Boehmert
Anwaltspartnerschaft mbB
Pettenkoferstrasse 22
80336 München (DE)**

(56) References cited:
**US-A1- 2017 323 274    US-A1- 2019 164 089
US-A1- 2023 118 644**

• **CHOUDHURY SHUSHMAN ET AL: "Scalable Anytime Planning for Multi-Agent MDPs", ARXIV.ORG, 1 January 2021 (2021-01-01), pages 1 - 11, XP093279112, Retrieved from the Internet <URL:https://arxiv.org/pdf/2101.04788> [retrieved on 20250504]**

**Description**

CROSS-REFERENCE TO RELATED APPLICATIONS AND PRIORITY

The present application claims priority to Indian application no. 202421004633, filed on 23 January 2024.

TECHNICAL FIELD

The embodiments herein generally relate to the field of intelligent airline process automation and, more particularly, to a method and system for Stochastic Minplus with State (SMS) agent-based approach for inline recovery of airline operations.

BACKGROUND

Flight delays are estimated to have cost airlines and passengers (PAX) large amounts of money. Airlines need to pay for perishable airport usage time. Further, PAX and crew inherit delays of their flights and may miss connections at hub airports. At a planning level, an airline schedule aims to handle delays through in-built buffers in the schedule. However, despite the best of planning, flight operations deviate from the plan. At an operational level, delays occur despite the schedule buffers. As one study shows, about 70% of operational delays are estimated to be under an airline's control.

To handle and reduce delays, airlines have an inline recovery process. When an incoming flight arrives late, an airline has a few inline control levers to handle the delay. These include deploying additional resources for cleaning the aircraft, holding a departing flight for connecting PAX, etc. These control levers come at a cost (e.g., of labor) and an associated benefit (e.g., reduced departure delay). The inline/tactical recovery problem, therefore, is to dynamically decide the appropriate recovery action for a flight at the Airline Operations Control Center. Since the airline network is complex and individual actors (e.g., a gate manager) have individual airport-level local metrics for optimality (e.g., turn-around delay for gate operations at that airport), the decision making for inline recovery in practice is highly localized at the airport-level, typically manual, and based on rules of thumb and department-specific performance targets.

While local and manual decision making for inline recovery is fast, it is most likely sub-optimal. First, the decision maker cannot take the perspective of the entire airline network due to the sheer complexity involved. Second, even if they intuitively understand the current state of the network (e.g., congestion by time-of-day patterns), the effect of the decisions may appear later in the network and not be directly quantifiable manually. Third, different human operators may make varying and highly subjective calls on local inline recovery for the same network state leading to unpredictable operations.

It is to be understood that a locally optimal action may not be globally efficient. Therefore, there is a need for automated decision support for global inline recovery.

SUMMARY

Embodiments of the present disclosure present technological improvements as solutions to one or more of the above-mentioned technical problems recognized by the inventors in conventional systems.

For example, in one embodiment, a method for inline recovery of airline operations is provided. The method includes receiving by a Stochastic-Minplus-with-State (SMS) agent executed by the one or more hardware processors, a current state of an airline network from a digital twin of the airline network, the current state comprising a set of inherited delay of each of a plurality of flights of the airline network currently operating in a time horizon across an airspace covered by the airline network, wherein the inherited delay of each of the plurality of flights is a result of previous actions implemented for inline recovery of each of the plurality of flights. Further, the method includes iteratively processing by the SMS agent, the current state of the airline network to generate an optimized action state vector for inline recovery of the plurality of flights in consideration with a plurality of constraints. An action state vector in each iteration is executed on the digital twin of the airline network to analyze the effect of the action state vector on the plurality of flights. The SMS agent processes an undirected coordination graph with a plurality of nodes representing the plurality of flights operating in the time horizon with associated inherited delays and the plurality of nodes connected via undirected edges between flights if at least a physical aircraft or one or more passengers are shared between the flights. The SMS agent iterates until an objective function is minimized, wherein the objective function is defined by cost incurred per missed passenger (PAX), a cost per unit of departure delay, and a cost of the intervention action for each flight among the plurality of flights. The SMS agent utilizes a state dependent cost function comprising (i) a node cost incorporating action cost function and (ii) an edge cost function comprising delay and PAX cost, wherein state dependent cost function determines the cost per unit of departure delay, and the cost of the intervention action for each flight.

Furthermore, the method includes recommending by the one SMS agent executed by the one or more hardware processors, the optimized action state vector for implementing in live operations of the airline network, wherein an actual action taken by the airline network for the plurality of flights is fed back to the digital twin as the current state of the airline network. The plurality of constraints comprise a set of resource constraints and a set of delay propagation constraints that further explicitly includes external noise from ground and air operations that are non-linear functions of delay. The non-linear functions of delay are addressed using a sample average across forecasted optimization scenarios.

In another aspect, a system for inline recovery of airline operations is provided. The system comprises a memory storing instructions; one or more Input/Output (I/O) interfaces; and one or more hardware processors coupled to the memory via the one or more I/O interfaces, wherein the one or more hardware processors are configured by the instructions to receive by a Stochastic-Minplus-with-State (SMS) agent executed by the one or more hardware processors, a current state of an airline network from a digital twin of the airline network, the current state comprising a set of inherited delay of each of a plurality of flights of the airline network currently operating in a time horizon across an airspace covered by the airline network, wherein the inherited delay of each of the plurality of flights is a result of previous actions implemented for inline recovery of each of the plurality of flights. Further, the one or more processors are configured to iteratively process by the SMS agent, the current state of the airline network to generate an optimized action state vector for inline recovery of the plurality of flights in consideration with a plurality of constraints. An action state vector in each iteration is executed on the digital twin of the airline network to analyze the effect of the action state vector on the plurality of flights. The SMS agent processes an undirected coordination graph with a plurality of nodes representing the plurality of flights operating in the time horizon with associated inherited delays and the plurality of nodes connected via undirected edges between flights if at least a physical aircraft or one or more passengers are shared between the flights. The SMS agent iterates until an objective function is minimized, wherein the objective function is defined by cost incurred per missed passenger (PAX), a cost per unit of departure delay, and a cost of the intervention action for each flight among the plurality of flights. The SMS agent utilizes a state dependent cost function comprising (i) a node cost incorporating action cost function and (ii) an edge cost function comprising delay and PAX cost, wherein state dependent cost function determines the cost per unit of departure delay, and the cost of the intervention action for each flight.

Furthermore, the one or more processors are configured to recommend via the one SMS agent executed by the one or more hardware processors, the optimized action state vector for implementing in live operations of the airline network, wherein an actual action taken by the airline network for the plurality of flights is fed back to the digital twin as the current state of the airline network. The plurality of constraints comprise a set of resource constraints and a set of delay propagation constraints that further explicitly includes external noise from ground and air operations that are non-linear functions of delay. The non-linear functions of delay are addressed using a sample average across forecasted optimization scenarios.

In yet another aspect, there are provided one or more non-transitory machine-readable information storage mediums comprising one or more instructions, which when executed by one or more hardware processors causes a method for inline recovery of airline operations.

The method includes receiving by a Stochastic-Minplus-with-State (SMS) agent executed by the one or more hardware processors, a current state of an airline network from a digital twin of the airline network, the current state comprising a set of inherited delay of each of a plurality of flights of the airline network currently operating in a time horizon across an airspace covered by the airline network, wherein the inherited delay of each of the plurality of flights is a result of previous actions implemented for inline recovery of each of the plurality of flights. Further, the method includes iteratively processing by the SMS agent, the current state of the airline network to generate an optimized action state vector for inline recovery of the plurality of flights in consideration with a plurality of constraints. An action state vector in each iteration is executed on the digital twin of the airline network to analyze the effect of the action state vector on the plurality of flights. The SMS agent processes an undirected coordination graph with a plurality of nodes representing the plurality of flights operating in the time horizon with associated inherited delays and the plurality of nodes connected via undirected edges between flights if at least a physical aircraft or one or more passengers are shared between the flights. The SMS agent iterates until an objective function is minimized, wherein the objective function is defined by cost incurred per missed passenger (PAX), a cost per unit of departure delay, and a cost of the intervention action for each flight among the plurality of flights. The SMS agent utilizes a state dependent cost function comprising (i) a node cost incorporating action cost function and (ii) an edge cost function comprising delay and PAX cost, wherein state dependent cost function determines the cost per unit of departure delay, and the cost of the intervention action for each flight.

Furthermore the method includes recommending by the one SMS agent executed by the one or more hardware processors, the optimized action state vector for implementing in live operations of the airline network, wherein an actual action taken by the airline network for the plurality of flights is fed back to the digital twin as the current state of the airline network. The plurality of constraints comprise a set of resource constraints and a set of delay propagation constraints that further explicitly includes external noise from ground and air operations that are non-linear functions of delay. The non-linear functions of delay are addressed using a sample average across forecasted optimization scenarios.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A illustrates an example scenario to understand a turn-around process and inline recovery problem in airline that is addressed by a system for Stochastic Minplus with State (SMS) agent-based approach for the inline recovery of airline operations, in accordance with some embodiments of the present disclosure.

FIG. 1B illustrates an architectural overview of the system for SMS agent-based approach for the inline recovery of the airline operations, in accordance with some embodiments of the present disclosure.

FIG. 1C is a functional block diagram of the system for SMS agent-based approach for the inline recovery of the airline operations, in accordance with some embodiments of the present disclosure.

FIGS. 2A through 2B (collectively referred as FIG. 2) is a flow diagram illustrating a method for SMS agent-based approach for the inline recovery of the airline operations, using the system depicted in FIG. 1A and 1B, in accordance with some embodiments of the present disclosure.

FIG. 3 depicts the relation and interdependency of a flight with neighboring flights at an airport, in accordance with some embodiments of the present disclosure.

FIGS. 4A through 6B are graphs depicting comparative performance results of the system with reference approaches, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Automated global inline recovery is non-trivial due to the complex dependencies between local actions and global effects. First, the reward for actions is non-linear. For example, delayed connecting passengers (PAXs) either miss or do not miss the connection depending on the duration for which a departing flight is held. Second, the action taken for recovering one flight affects other flights locally. For example, a flight spending more time at a gate than scheduled would delay a subsequent flight at the same gate. Third, the action taken for recovering one flight affects other flights globally. A flight $f_j$ departing late (primary delay) from an airport $A_j$ to $A_i$ could result in a subsequent late departure (secondary delay) of the next flight $f_i$ departing from $A_i$. Fourth, airport resources for recovery are constrained. Finally, incoming airline crew need to be eligible for operating their outgoing next flight. Excess delay might push them off a shift boundary and make it illegal for a take-off. Thus, local actions cause higher-order global effects and considering them for decision making can be computationally challenging.

Airline disruption recovery is a well-researched problem in literature. The disruption recovery involves schedule recovery, aircraft recovery, crew recovery, passenger recovery, or a combination of two or more. Different optimization methods used in the literature for the recovery include constraint programming (CP), integer programming (IP), mixed integer linear programming with a rolling horizon, and conic quadratic mixed integer programming. These exact optimization techniques do not scale for a large number of flights and hence, may not be suitable for inline recovery. Hence, heuristic approaches have been developed in the literature which, though sub-optimal, can give quick solutions suitable for inline recovery. However, these heuristic approaches do not always account for uncertainty in airline operations. To incorporate such an uncertainty, the above methods may be combined with simulations, resulting in 'simheuristics'. Studies have used a variety of recovery actions such as flight delay, flight cancellation, aircraft swap, cruise speed control, PAX itinerary change, and quick ground turn-around. Quick ground turn-around has shown promise in reducing flight delays and intentional delays (i.e., 'hold') of connecting flights can reduce missed PAX connections.

MaxPlus is an algorithm for joint action selection over coordination graphs that is based on passing payoff messages along edges. It is an anytime heuristic that can scale to large graphs. It is computationally faster than similar exact methods of joint action selection like variable elimination. While it provably converges to the optimal solution for cycle-free graphs, it has also been shown empirically to work well for graphs with cycles. The benefits of this algorithm have been demonstrated in domains like multi-drone delivery with dynamic coordination graphs and urban traffic lights control.

The airline inline recovery problem is stated below to understand the solution to be provided, specifically with respect to modifications to conventional MaxPlus.

**Problem statement:** At time $t$, given the currently known global state $st$ of a set of flights as a boundary condition, the goal is to identify, in a computationally efficient manner, the global inline recovery actions of all flights of the airline, departing across all airports, over a future optimization horizon $[t+L, t+L+H]$. In practice, the problem would be solved by the operations control center of the airline using data feeds from all airports. This computation is to be repeated continuously in a rolling horizon fashion for $t = 0, \delta, 2\delta, \cdots$. To handle the global effect, a suitably large horizon $H$ can be chosen. To handle randomness, the stochastic optimization objective is to minimize a weighted combination of expected business performance metrics (departure delays of flights and missed PAX connections), and the deterministic cost of recovery actions. The constraints need to handle delay propagation and resource availability for recovery at airports. Because resources for inline recovery need to be moved across an airport, decision making, and implementation need to be separated by a lead-time $L$. Because the operating conditions are highly dynamic, the control timestep $\delta$ cannot be too large. The time for decision making is limited, thus making conventional optimization unsatisfactory either in the compute time required or the quality of solution obtained. Thus, heuristic methods are resorted to, but they may not always incorporate the uncertainty in airline operations.

To address the above technical challenges in providing intelligent automated solution for inline recovery for airlines with globally optimized solution embodiments of the present disclosure provide a method and system for Stochastic Minplus with State (SMS) agent-based approach for inline recovery of an airline. The SMS agent disclosed herein is a scalable message-passing algorithm for inline recovery, is and enhancement over the MaxPlus algorithm available in literature to apply for practical challenges of addressing inline recovery as mentioned above. The method and system disclosed herein with solution provided by the SMS agent reduces delays and missed PAX connections. In conventional MaxPlus, agents $A_i$ coordinate their actions to maximize a joint objective with purely action-dependent cost functions defined on nodes and edges of the coordination graph. The SMS- agent generalizes the MaxPlus for airline operations in the following ways. The SMS agent first exploits the structure of the problem explicitly using a coordination graph for airline operations to capture the interactions between flights and PAX. Second, the conventional MaxPlus is augmented with a state (the inherited delay of an aircraft). Third, the SMS agent incorporates uncertainty by evaluating the message passing payoff functions as stochastic averages of various optimization scenarios to identify the common optimal actions that minimize (hence, the terminology MinPlus used herein) the expected costs across all the scenarios. Lastly, all resource constraints are modelled for inline recovery through a unique way of resolving potential conflicts using the payoff functions.

This the method and system disclosed herein models inline recovery for intelligent airline operations as a stochastic optimization problem that captures higher-order network-wide effects of airport-level local recovery actions. An agent-based approach is designed for integrated inline recovery in airline operations. The system exploits domain knowledge encoded as a coordination graph to achieve scale for real-time decision making. Also, unlike a few airline recovery solutions that handle problem sequentially, i.e., solving flight recovery and crew recovery flowed by passenger recovery, which can lead to sub-optimal solutions, the method herein treats the recovery problem in an integrated fashion, i.e. flight and passenger recovery are treated together and not sequentially to provide optimal solution.

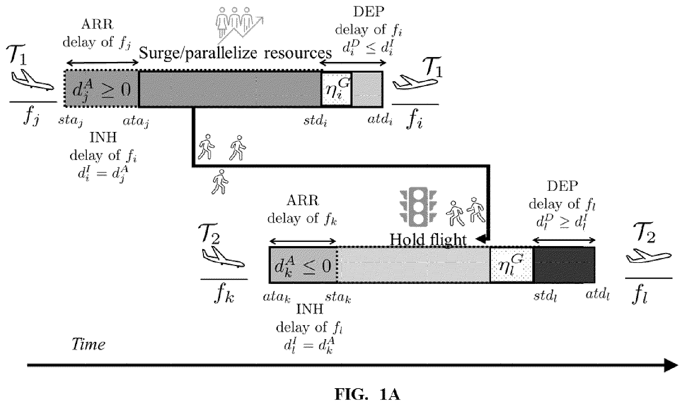

Referring now to the drawings, and more particularly to FIGS. 1A through 6B, where similar reference characters denote corresponding features consistently throughout the figures, there are shown preferred embodiments, and these embodiments are described in the context of the following exemplary system and/or method.

FIG. 1A illustrates an example scenario to understand a turn-around process and inline recovery problem in airline that is addressed by a system 100 for Stochastic Minplus with State (SMS) agent-based approach for the inline recovery of an airline, in accordance with some embodiments of the present disclosure. In airline operations, an incoming flight is "turned around" as an outgoing flight after deboarding, cleaning, baggage handling, boarding, etc. FIG. 1A illustrates turn-around processes of two aircraft at an airport. A tail or physical aircraft $T_1$ arrives as flight $f_j$ at the actual (scheduled) time of arrival $ata_j$ ($sta_j$) and takes off as flight $f_i$ at the actual (scheduled) departure time $atd_i$ ($std_i$). The arrival delay $d^A_j \triangleq ata_j - sta_j$ is the difference between actual and scheduled times of arrival of $f_j$. The arrival delay $d^A_j$ of flight $f_j$ becomes the inherited delay $d^I_i$ of flight $f_i$. If $d^I_i \geq 0$ and the schedule between $f_j$ and $f_i$ has no buffer time (i.e. a quick turn), then the departure delay is given by $d^D_i = d^I + \eta^G_i$, where $\eta^G_i$ is a random ground delay (in this case, shown as positive). However, if the turn-around process is sped up by $\sigma_i$ by surging resources as an inline recovery, then the departure delay $d^D_i = d^I + \eta^G_i - \sigma_i$. Provided $\eta^{Gi} < \sigma_i$, the inline action attenuates the delay propagation in the network through a net reduction in the inherited delay. Similarly, $d^A_i = d^D_i + \eta^A_i$, i.e., the arrival delay is the sum of the departure delay and any randomness $\eta^A_i$ encountered in the airtime due to, say, weather conditions. A dual case is illustrated for the tail $T_2$. Here, $f_k$ arrives ahead of schedule, so $d^I_l$, the inherited delay of $f_l$, is negative. Further, the ground delay $\eta^G_l$ is negative, so the flight is ready for take-off at time $std_l$ if early departures are disallowed.

However, if flight $f_l$ is held for incoming PAX connecting from a delayed arrival flight $f_{l'}$, then the departure delay $d^D_l$

$= \sigma_l$, where the inline hold action increases the departure delay by $\sigma^I$ to accommodate incoming PAX. Inline actions can thus increase or decrease the departure delays of outgoing flights.

It can be noted that swap, reserve utilization and the like are other ways to speed up (avoid delays in the network). Similarly cancellation, passenger rebooking and the like are other hold actions (passengers are delayed). However, the experimental results, for sake of brevity, focus on surge, parallelize and holding the flight departure.

**Actions for inline recovery:** A recovery action has a cost (typically, airport resources or personnel) and a specific impact on the delay (increase/decrease). Common actions used by the system 100 for inline recovery that are considered include:

- **Surge:** Here, additional cleaning crew, baggage handlers, etc. speed up the turn-around process. Because these resources are constrained, only a few flights can surge simultaneously at an airport.
- **Parallelize:** Here, the parallelism in the turn-around process is improved by allowing PAX to board when the aircraft is being refueled. Because this involves requesting the fire brigade to be near the aircraft, only a few flights can be parallelized simultaneously.
- **Hold:** Here, the departing flight waits at a gate for incoming PAX. The resource cost is the gate time. If the gate is shared across airlines, the airport can impose a delay cost on the waiting airline. In general, hold can be of various durations (chosen durations 5min, 10 min, 15 min) as per the airline's policy. Each can be an action.
- **No intervention (NOOP)** is always a feasible action. Later, the delay change and resource cost of each of the six possible actions is described in context of solution provided by the system 100.

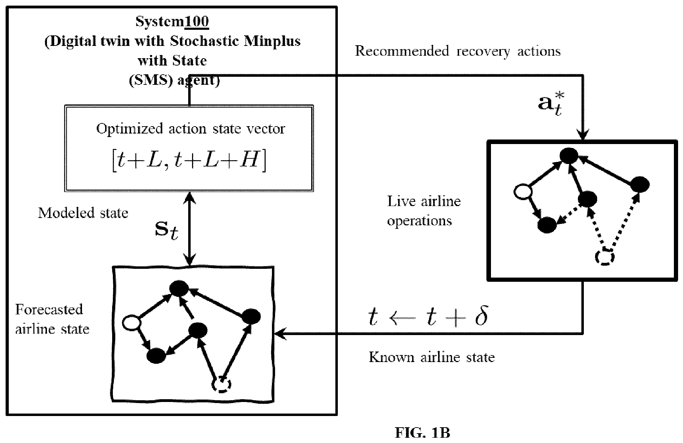

FIG. 1B illustrates an architectural overview of the system 100 for the SMS agent-based approach for the inline recovery of an airline, in accordance with some embodiments of the present disclosure. The system comprises a digital twin of an airline seeking inline recovery solution in communication with the SMS agent. At each control timestep $t$, the system 100 chooses optimized-actions a* to minimize the total business cost over a horizon $H$ ranging from $t+L$ to $t+L+H$. The horizon H is a rolling horizon (time window) over time steps of $t = 0, \delta, 2\delta, \cdots$. For example in experimental setup below H=6 Hours and $\delta$ =1Hour. Herein H=6 is selected as it is the optimal knee point for that particular airline when comparing the cost vs benefit. $\delta$ is 1 as airports need at least an hour's time to react to change requests. The global impact is modeled by considering all flights of the airline departing in $H$ across all airports. $L$ is the lead time for implementing actions. In an example implementation the system 100 can be operated from a central location where all airline operations managers are located. The system 100 is deployed in a cloud server or an airline datacenter. The system 100, via the SMS agent minimizes an objective function $O$ in accordance with a plurality of constraints to generate and recommend a set of the optimized actions a* to an operator of the live airline network . The objective function is defined as a function of the actions a chosen for all flights to be optimized in the horizon (H), also referred to as time window. Specifically, the objective is a weighed sum of the missed PAX connections, departure delays of flights, and the cost of the interventions. The plurality of constraints comprise a set of resource constraints and a set of delay propagation constraints that further explicitly includes external noise from ground and air operations that are non-linear functions of delay. The non-linear functions of delay are addressed using a sample average across forecasted optimization scenarios. The recommended optimized actions are analyzed by the operator, wherein the actual action taken by the airline network for the plurality of flights is fed back to the digital twin as the current state of the airline network. This provides a heuristic approach to continuously capture the updated state of the network.

The objective function (O): Here, $w_P$ is the cost incurred per missed PAX (assumed constant), $MC(j, i)$ is the number of missed PAX connections from flight $f_j$ to $f_i$, $w_{Di}$ is the cost per unit of departure delay (assumed to depend on the airport), and $C(a_i)$ is the cost of the intervention action $a_i$. Because the missed connections and the delays are stochastic, their expectation (E[.]) is considered over the intrinsic random quantities $\eta$, namely, the random ground $\eta^G_i$ and air $\eta^A_i$ delays encountered by each flight $f_i$. The cost of actions are assumed deterministic.

$$O(a) = \mathbb{E}_\eta \left[ w_P \sum_{ji} MC(j,i) + \sum_i w_{D_i} d_i^D \right] + \sum_i C(a_i) \qquad (1)$$

$$a^* = \underset{a}{\mathrm{argmin}} \, O(a) \qquad (2)$$

The key constraints are as follows:

$$\forall t'_{t' \in [t,t+H]} \forall k \left( \sum_{i,t' \in tap_i} a_{ik} <= R_k \right) \qquad (3)$$

$$\forall i, b_i = sta_j + d_j^A \qquad (4)$$

$$\forall i, d_i^I = d_j^A \qquad (5)$$

$$\forall i, d_i^D = max(max(d_i^I + \eta_i^G - buf_i, 0) + \sigma(a_i), 0) \quad (6)$$

$$\forall i, e_i = std_i + d_i^D \qquad (7)$$

$$\forall i, d_i^A = d_i^D + \eta_i^A \qquad (8)$$

**Resource constraint:**

- Constraint in equation 3 above indicates anytime number of recovery resources used by all flights $f_i$ for each type of action $k$ does not exceed the resource count $R_k$ at each airport. Specifically, if $f_i$ chooses action $k$ (making the binary variable $a_{ik} = 1$), a resource of type $k$ would be used during the entire turn-around process duration $tap_i$ of $fi$. Note that this resource constraint is only enforced for flights departing from the same airport and have potential overlaps in their turn-around processes.

Delay **propagation constraints:**

- Constraint in equation 4 states that a flight $f_i$ starts its turn-around (at $b_i$) when the previous flight $f_j$ of the same tail arrives, which in turn is at the sum of the scheduled time of arrival $sta_j$ and its arrival delay $d^A_j$.
- Constraint in equation 5 makes the inherited delay of a flight $d^I_i$ equal the arrival delay of its previous flight $d^A_j$.
- Constraint in equation 6 relates the departure delay $d^D_i$ to the inherited delay; random ground-delay $\eta^G_i$ the built-in schedule buffer $buf_i$; and the delay change $\sigma(a_i)$ due to action $a_i$ for flight $f_i$. The double max formulation disallows early departures.
- Constraint in equation 7 relates the end-time of service $e_i$ to the scheduled time of departure $std_i$ and the departure delay $d^D_i$.
- Constraint in equation 8 relates the arrival delay of a flight $d^A_i$ to its departure delay and the random air-delay $\eta^A_i$.

**Stochastic approximation objective:** Constraints in equation 6 and 8 explicitly include external noise from ground and air operations as in reality. Because the objective has components that are non-linear functions of delays (e.g., a PAX misses or does not miss a connection), obtaining a closed form expression for the expectation in the objective is non-trivial, if not impossible, for an arbitrary initial state of the network. Instead, the expectation of the objective is approximated as a sample average across several evolutions of the network (i.e., forecasted optimization scenarios) and obtain one common action vector that optimizes the sample average.

This is commonly referred to as scenario-based optimization in the literature. Specifically, the actions to be chosen are obtained as $a^* = $ arg $min_a$ $\hat{O}(a)$, where

$$O(a) \approx \hat{O}(a) \triangleq \frac{\sum_{k=1}^{k=N} O(a, \eta_k)}{N} \qquad (9)$$

for $N$ forecasted optimization scenarios. Once $\eta_k$ are sampled, the optimization problem for $\hat{O}$ can be solved using solvers. However, as seen later, conventional optimizers can be too time consuming to solve the problem in real-time for inline recovery.

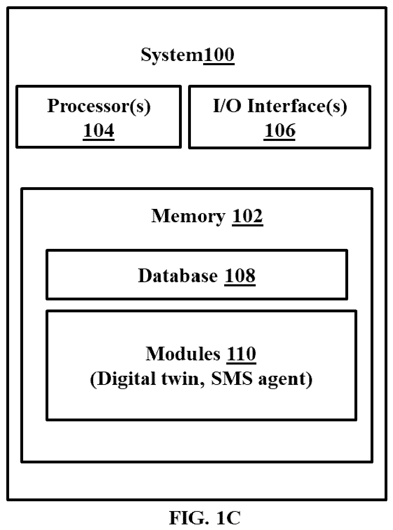

FIG. 1C is a functional block diagram of the system 100 for SMS agent-based approach for the inline recovery of the airline, in accordance with some embodiments of the present disclosure. In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110 such as the digital twin of an airline and a SMS agent. The plurality of modules 110 include programs or coded instructions that supplement applications or functions performed by the system 100 for executing different steps involved in the process of inline recovery, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system 100 and methods of the present disclosure.

Further, the memory 102 includes a database 108. The database (or repository) 108 may include a plurality of abstracted pieces of code for refinement and data that is processed, received, or generated as a result of the execution of the plurality of modules in the module(s) 110.

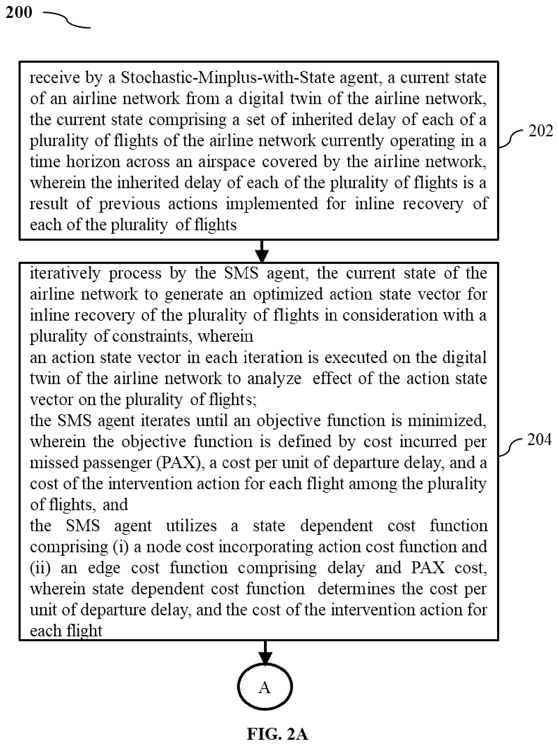

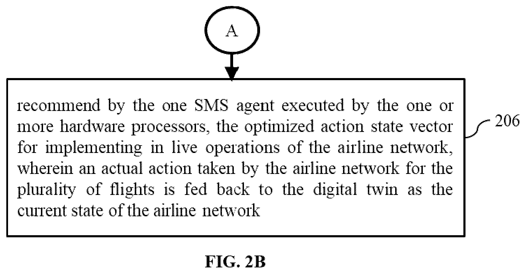

Although the data base 108 is shown internal to the system 100, it will be noted that, in alternate embodiments, the database 108 can also be implemented external to the system 100, and communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to FIG. 2 through FIG. 6B.

FIGS. 2A through 2B (collectively referred as FIG. 2) is a flow diagram illustrating a method 200 for SMS agent-based approach for the inline recovery of the airline, using the system depicted in FIG. 1A and 1B, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1B and 1C and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to the steps of the method 200, at step 202 of the method 200, the SMS agent executed by the one or more hardware processors 104 is configured by the instructions to receive from the digital twin of an airline network, a current state of the airline network comprising a set of inherited delay of each of a plurality of flights of the airline network currently operating in a time horizon (also referred to as Horizon H) across an airspace covered by the airline network. The digital twin of an entire airline network for whom optimized inline recovery actions are to be recommended is integrated in the system 100. The digital twin is created using SimPy™ package in Python. The twin starts with replicating the entire airline schedule and pax connectivity. Additionally it also generates random delays that happen along a tail plan. All these data can be read from a pickle file or passed as a Json/xml. Thus, the digital twin captures the live airline operations across the global network with help of sensors and information channels and is then utilized by the SMS agent for optimizing flights across a predefined horizon, or current time window. Thus all flights in action during the horizon under consideration and analyzed for generating inline recovery actions so that all flights together get an optimized solution. An example time window can be 6 hours, or a 24 hour (one day network operations), wherein H is flexible to be selected by the airline based on the optimal knee point for that airline in a cost benefit analysis. As explained with respect to FIG. 1A, the inherited delay of each of the plurality of flights is a result of previous actions state vector for inline recovery of each of the plurality of flights.

At step 204 of the method 200, the SMS agent executed by the one or more hardware processors 104 is configured by the instructions to iteratively process in conjunction with execution of actions on the digital twin, the current state of the airline network to generate an optimized action state vector (a*) for inline recovery of the plurality of flights in consideration with a plurality of constraints. The action state vector in each iteration is executed on the digital twin of the airline network, to analyze the effect of the action state vector on the plurality of flights.

The SMS agent processes an undirected coordination graph having the plurality of flights operating in the current time window representing nodes associated with the current states and connected via undirected edges between flights if at least a physical aircraft or one or more passengers are shared between the flights. As depicted in the algorithm 1 below, the SMS agent iterates until the objective function is minimized. As can be seen in equation 1 and 2, the objective function is defined by cost incurred per missed passenger (PAX), a cost per unit of departure delay, and a cost of the intervention action for each flight among the plurality of flights. The SMS agent utilizes a state dependent cost function comprising (i) a node cost incorporating action cost and (ii) an edge cost function incorporating delay and PAX cost, wherein state dependent cost function determines the cost per unit of departure delay, and the cost of the intervention action for each flight.

**The SMS agent:** In MaxPlus, agents are nodes in a coordination graph $G = (V, E)$. Each agent exchanges messages with its neighbors in the coordination graph to jointly coordinate their actions to maximize a common global objective. The common global objective is defined using node-level ($\phi_i(a_i)$) and edge-level ($\phi_{ij}(a_i, a_j)$) deterministic cost functions of agent actions $a_i$, $a_j$ as:

$$\sum_{v_i \in V} \phi_i + \sum_{e_{ij} \in E} \phi_{ij} \qquad (10)$$

However, in the SMS, MaxPlus algorithm is generalized for inline recovery. Specifically, each flight is an agent, and a coordination graph is defined using domain knowledge to model the interactions between flights. In addition, a state for each agent is included and decide coordinated actions in a stochastic environment. Thus, this allows state-dependent cost functions as opposed to purely action-dependent cost functions.

The SMS agent allows randomness, hence can handle expectations as a joint objective rather than a deterministic function. The state-dependent cost functions $\phi'_i$ and $\phi'_{ij}$ are obtained by evaluating the $\phi$ functions in the original algorithm for specific states $s_i$ and $s_j$ as $\phi_i(a_i; s_i)$ and $\phi_{ij}(a_i, a_j; s_i, s_j)$. As the state of a flight depends on the actions taken by a previous flight, a fixed point-iteration is used for state-updates between each message passing round.

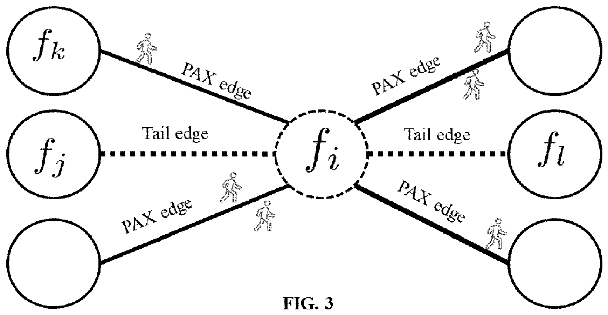

**Coordination graph for airline operations:** FIG. 3 illustrates the undirected coordination graph $G = (V, E)$ construct. The vertex set $V$ is the set of flights $F$ departing in the optimization window (of length $H$). An undirected edge $e_{ij}$ is added between flights, $f_i$ and $f_j$, in $G$, if $f_i$ and $f_j$ share either the aircraft or connecting PAX. Specifically, a tail edge is added to the graph if the same physical aircraft serving as incoming flight $f_j$ departs as outgoing flight $f_i$. In this case the arriving delay $d^A_j$ of flight $f_j$ becomes the inherited delay $d^I_i$ of flight $f_i$ during state updates. A PAX edge is added to the graph if PAX on incoming flight $f_k$ connect to outgoing flight $f_i$. So a delay of $f_k$ would influence the value of connections missed by $f_i$ depending upon the arrival delay of $f_k$ and the departing delay of $f_i$. A tail parent of a flight is also allowed to also be a PAX parent if needed with an adjusted cost function. Because the tail-plan and the PAX connections are assumed to be known, the structure of the coordination graph is treated as stationary in each window. The extent of influence would, however, vary with the individual inherited, arrival, and departure delays of the flights, and the number of PAX connections.

### State-dependent cost functions

State: The state of each node (flight) fi in the graph is the inherited delay $d^I_i$. The nodes who have no neighbors departing ahead of them in time in the graph are referred to as sources. The observed state $d^I$ of the source nodes is obtained from the operational data as the result of the implemented actions of the previous decision windows. For the non-source nodes (whose actions are to be decided), the actions chosen as the algorithm 1 progresses can be propagated through the coordination graph to obtain a forecasted state. This is captured in the procedure Update-State which uses Equations 4 - 8 to update the forecasted state of the network.

**Cost functions:** The cost functions of nodes and edges in the coordination graph are such that the sum of the node costs and the edge costs defined in the MaxPlus objective in Equation 10 matches exactly with the business optimization objective mentioned in Equation 1. The cost of an action $a_i$ of flight $f_i$ ($C_i(a_i)$) is expected to be the node cost of flight $f_i$. However, for numerical stability, node cost is chosen to be zero; and instead, amortize the action cost across all edges incident on the node as $c'_i(a_i) \triangleq C_i(a_i)/\Delta_i$ where $\Delta_i$ is the degree of $f_i$ in $G$.

Given the states $d^I_i$ and $d^I_j$ of the flights in an edge $e_{ij}$ in $G$, the edge cost functions is defined for the actions as follows. For a tail edge $e_{ij}$, the cost of the edge is the average weighted departure delay of the arriving and departing flights $f_i$

and $f_j$, i.e., $\phi'_{ij}(a_i, a_j, d^l_i, d^l_j) \triangleq (w^D_i d^D_i + w^D_j d^D_j)/2 + c'_i(a_i) + c'_j(a_j)$. Because any non-boundary-condition flight occurs as part of two tail edges, the delay cost is divided by 2. For boundary-condition flights, the departure delay cost is added without dividing by 2. For a PAX edge $e_{ij}$, the cost

$\phi'_{ij}(a_i, a_j, d^l_i, d^l_j) \triangleq w_P MC(i, j) + c'_i(a_i) + c'_j(a_j)$, i.e., the cost of the PAX ( passengers) who miss the connections given the inherited delays of the flights and the actions they take (e.g., speed, hold, etc.).

With these definitions, the objective in the SMS agent matches Equation 1. This cost functions determination procedure, named Get-Cost, is used in lines 3, 22, and 24 of the SMS Algorithm 1.

### Algorithm 1: Stochastic-MinPlus-with-State ($\boldsymbol{G}$)

// Compute projected state of network assuming all

// flights choose no intervention action

1 $a^* = $ NOOP

2 $d^l = $ Update-State $(G, a^*)$

3 $\forall i, j, k\ \phi'_{ki} = 0, \phi'_{kij} = \mathrm{GET-COST}(\mathrm{G}, \mathbf{d}^l, \boldsymbol{a}^*)$

4 converged = False

5 while not converged

　　　　// Compute payoff messages $\mu_{kij}(a_j; \eta_k)$ for each

// scenario $\eta_k$ using only actions while

// assuming the state does not change with action chosen

6     for each stochastic scenario $\eta_k$

7        for each flight $f_i$ in $G$

8           for each $f_j$ in neighbors N($f_i$) of $f_i$

9              for each action $a_j$ of $f_j$

10                 Compute $\mu_{kij}(a_j; \eta_k)$ as per Eq. 11

// Compute the local payoff at each node $fi$

// depending on how it affects its neighbors

11     for each stochastic scenario $\eta_k$

12        for each flight $f_i$ in $G$

13           for each action $a_i$ of $f_i$

14              $g_{ki}(a_i; \eta_k) = \phi'_{ki}(a_i; \eta_k + \sum_{j \in N_i} \mu_{kji}(a_i; \eta_k)$

// Choose optimal action for flight $f_i$

15     for each flight $f_i$ in $G$

16        $a_i^* = \underset{a_i}{\operatorname{argmin}} \sum_k g_{ki}(a_i; \eta_k)$

// Enforce resource constraints

17     for each flight $fi$ in $G$

18        $a^*_i = \text{Resolve-Conflicts}(G, \boldsymbol{a^*}, \mathbf{d}^I)$

// Update state to be in sync with actions

// chosen in current round

19     $\mathbf{d}^I = \text{Update-State}(G, a^*)$

// Compute state-dependent cost function

20     for each stochastic scenario $\eta_k$

21        for each flight $f_i$ in $G$

22           $\phi'_{ki}(a_i, d_i^I; \eta_k) = 0$

23           for each neighbor $f_j$ of $f_i$

24              $\phi'_{kij}(a_i, a_j d_i^I, d_j^I; \eta_k) = \text{GET} - \text{COST}(G, \mathbf{d}^I, a^*)$

**Algorithm 1: SMS agent** (SMS): Given the current state of the network in the coordination graph $G$, and an initial set of actions, SMS agent begins by initializing the graph with an estimated state for all flights in the optimization window. At the end of this step in line 2 in Algorithm 1, each flight $f_i$ has an actual or estimated inherited delay $d^I_i$ as the result of the initial set of actions. Collectively the state of the network is represented as the set of all inherited delays $\mathbf{d}^I$. The local cost functions $\phi'_{ki}$ and $\phi'_{kij}$ are initialized in line 3 using the Get-Cost procedure. As with MaxPlus, SMS proceeds in the rounds till convergence. However, additionally the SMS agent considers stochastic optimization scenarios as in Equation 9. These scenarios are parametrized as $\eta_k$. For each $\eta_k$, independent random samples of all unseen disturbances are drawn from the ground delay and the air delay distributions. As in the baseline IP and CP approaches, the objective is to identify the optimal actions that minimize the sample averaged approximation of the expected objective. Therefore, the actions for all flights are the same across all the scenarios. In each round, a flight $f_i$ coordinates with its neighbors $f_j$ to decide the action $a^*_i$ that is the most beneficial at a global level. To this end, in lines 6 through 10, each flight $f_i$ sends a message $\mu_{kij}$ to $f_j$ that is defined as follows:

$$\mu_{kij}\mu\left(a_j\right) \triangleq \min_{a_i}(\phi'_{ki}(a_i) + \phi'_{kij}(a_i, a_j) + \textstyle\sum_{l \in N_i - \{f_j\}} \mu_{kli}\, a_i \qquad (11)$$

The terms in Equation 11 also depend on the appropriate states $d^l$ and the scenario $\eta_k$ but they are omitted for brevity. Intuitively, through message $\mu_{kij}$, the agent $f_i$ informs its neighbor $f_j$ (in scenario $\eta_k$) about the effect of the action $a_j$ chosen by $f_j$ when considering the local cost at $f_i$ (using $\phi'_{ki}$), the pairwise edge cost of the interaction between $f_i$ and $f_j$ (using ($\phi'_{kij}$), and the effects of neighbors $f_l$ (in neighborhood $N_i$) other than $f_j$ (recursively using previous estimates of $\mu_{kli}$). Once an agent $f_i$ receives the $\mu$ messages from all its neighbors $f_j$, it consolidates the local payoff of its (i.e., $f_i$'s) actions through the $g_{ki}$ function in line 14 of the algorithm 1. Stochastic averaging: The $\mu$ and $g$ functions are computed by each agent $f_i$ for every stochastic scenario $\eta_k$. However, the optimal action $\alpha^*_i$ for $f_i$ is chosen as that which minimizes the ensemble averaged $g$ function in line 16. This is in line with the goal of minimizing an expectation approximation as in Equation 9.

**Resource constraints:** The resource constraints are handled by identifying and resolving any conflicts in the procedure Resolve-Conflicts across flights departing from the same airport with overlapping turn-arounds. Flights are ordered by increasing $\sum_k g_{ki}\left(a_i^*; \eta_k\right) - \sum_k g_{ki}\left(NOOP; \eta_k\right)$, where $a^*_i$ is the optimal action chosen in line 16. Flights appearing earlier in this ordering get preference on the shared resource. If no resource is free during the turn-around of a flight, its optimal action is flipped to the next-best action given by its $g$ function in line 14. This process is repeated for all the flights and all the intervention actions till there are no more action flips. At the end of Resolve-Conflicts, finalized optimal actions in line 18 are obtained that adhere to the resource constraints as per Equation 3.

**State and costs update:** In SMS, an agent's action (e.g., tail-parent's hold action) influences the state of another agent (e.g., the inherited delay of the tail-child). To model this, Update-State is implemented in line 19 that propagates the effect of all currently chosen actions across the entire network using the coordination graph to give a new estimated state. Similarly, the local cost functions $\phi'$ are updated for specific states in lines 20 to 24 using the Get-Cost procedure. To avoid numerical instabilities, the payoff functions $\mu$ are normalized by the mean across all the actions as in MaxPlus.

It can be noted that swap, reserve utilization and the like are other ways to speed up (avoid delays in the network). Similarly cancellation, passenger rebooking and the like are other hold actions (to address passengers are delay). However, the experimental results, for sake of brevity, focus on surge, parallelize and holding the flight departure. Thus, the experimental results below depict optimization obtained by the SMS agent while using only surge, parallelize and flight hold. The additional actions will also work with the same objective function as it is built based on the core business considerations of an airline. From the SMS agent perspective it only needs to know the cost and impact of the actions that will be included in the action list of the airline.

Referring back to the steps of method 200 and as depicted in FIG. 1B, at step 206 of the method 200, the SMS agent executed by the one or more hardware processors 104 is configured by the instructions to recommend the optimized action state vector for implementing in live operations of the airline network, wherein the actual action taken by the airline network for the plurality of flights is fed back to the digital twin as the current state of the airline network. This is a heuristics approach to capture the updated state of the network.

**EXPERIMENT SETUP:**

Dataset: The tail-plans and schedule of an airline were obtained over a period of 1 week. The tail-plans provide the mapping between physical aircraft and logical flights in the airline network. The schedule provides the details of the scheduled times of arrival and departure of the flights. It is assumed that an aircraft on the ground that has a significant gap between the incoming and outgoing flights is tugged out to the hangar or tarmac as is the conventional practice. Such an aircraft will be considered for inline recovery only if it is extremely delayed. For PAX data, representative data of the airline synthetic PAX data was obtained. Specifically, the assumption is that connections are possible between an incoming and outgoing flight at an airport if the separation between them is higher than a minimum connection time of 45 minutes. Next, a PAX is assigned on the incoming flight to a connecting itinerary with a probability determined by the weight of the OD pairs in the BTS database. This is done while ensuring that all incoming and outgoing PAX are accounted for including local ground arrivals and departures. Table 1 summarizes the costs and benefits (delay changes) of the actions for hub and spoke airports.

Table 1: Cost and benefit of actions

| Action | Hub cost | Spoke cost | Delay change (min) |
|---|---|---|---|
| NOOP | 0 | 0 | 0 |
| PARALLELIZE | 600 | 400 | -5 |
| SURGE | 1200 | 800 | -10 |
| HOLD_5 min | 60 | 30 | +5 |
| HOLD_10 min | 120 | 60 | +10 |
| HOLD_15 min | 180 | 80 | +15 |

Simulation environment: Because the method disclosed cannot be readily deployed in a real airline network due to business considerations, a simulation environment for airline operations is implemented, for example in SimPy™, a discrete event simulation library based in Python. Using the above dataset curated from real-world sources, the arrival, turn-around, and departure processes of an airline network is simulated at scale, with random ground and air delays drawn from uniform distributions with parameters [0, 10] minutes and [-4, 8] minutes, respectively. A lead time L of 30 minutes is assumed, and a control timestep $\delta$ of 45 minutes. At each airport, a resource contention is modeled to ensure that an arbitrary number of flights cannot access recovery resources for an inline action at the same time. The simulation environment is validated by comparing the average delay, on-time performance, and the number of PAX missing connections with the real-world environment.

Baselines:

- NOOP: No operations, where regular operations are carried out without any operational intervention. This serves as a bound for the performance on business metrics.
- GREEDY: Each flight makes a locally optimal decision to optimize the objective in Equation 1 just for that flight alone. This serves to quantify the difference between considering a purely local vs a global objective.
- CP Here, the objective in Equation 1 is solved for a window of optimization using the constraint satisfaction solver cp-sat from the Google™ or-tools optimization suite.
- IP: Here, the objective in Equation 1 is solved for a window of optimization using the integer programming solver SCIP from the Google™ or-tools optimization suite.

Operational Regimes:

- BAU: This represents business-as-usual evolution of the network delays without any irregular operations.
- IROP: This represents interrupted operations where all departing flights at airports in the same geographical area are assumed to incur higher departure delays due to temporary irregular operations.

Scenarios: For algorithms that use forecasted state for scenario based optimization, $|\mu_k|$=10 stochastic forecasted optimization scenarios are considered. Each regime is evaluated as an average of 20 stochastic evaluation scenarios that are independent of the stochastic optimization scenarios.

Performance metrics: All algorithms are run with a maximum timeout of 20 minutes reflective of the typical control time available for airline operations. The business metrics considered are: 1) the average cost of departure delay of flights (assuming representative $w_D$ of 180 and 60 units/minute at hub and spoke airports, respectively); 2) the average cost of missed PAX connections (assuming $w_P$ = 200); 3) the average cost of the actions chosen for inline interventions; and 4) a total cost that is a combination of all these. A lower cost is better. If the algorithm completes within the timeout, it is the optimal solution, else the best intermediate solution is considered. In addition, the run-time of algorithms is considered to either completion or timeout on a server-class machine.

RESULTS:

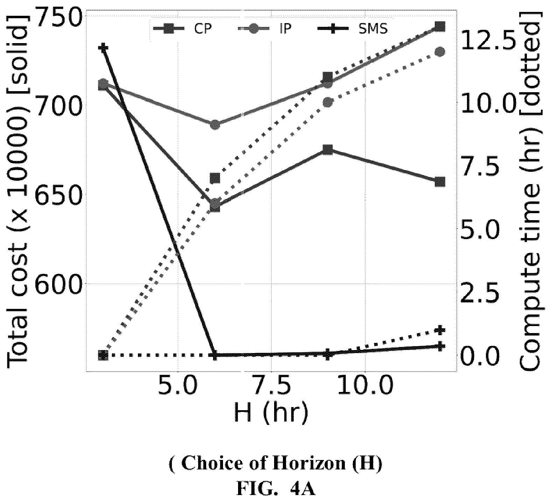

Optimization horizon H: FIG. 4A shows the rationale for the choice of H. A larger H would capture more global effects but take more time. The X-axis shows H; and the primary (secondary) Y-axis shows the total cost (total compute time across all decision windows). The total cost initially decreases with increasing H. It saturates at H = 6 hours for SMS and increases for others due to the inability to find good solutions. However, the computation time as expected keeps increasing with increasing H. Therefore, in results H = 6 hours is reported for all algorithms.

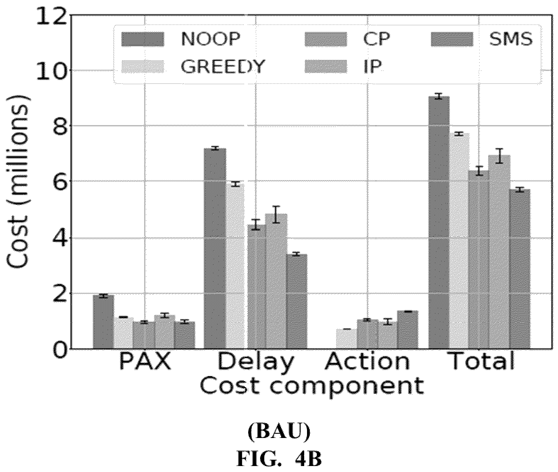

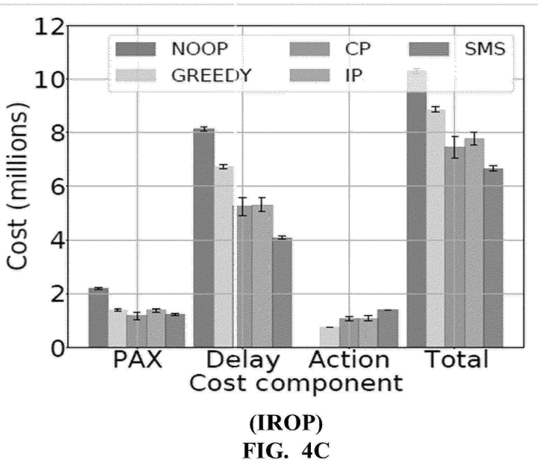

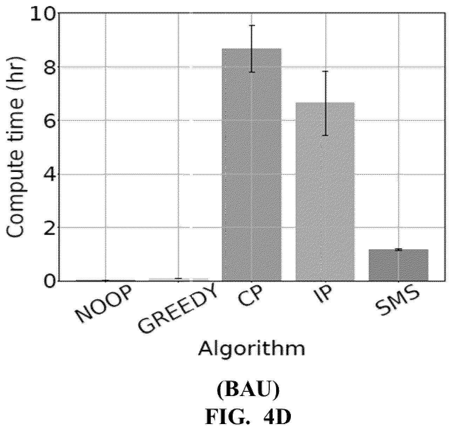

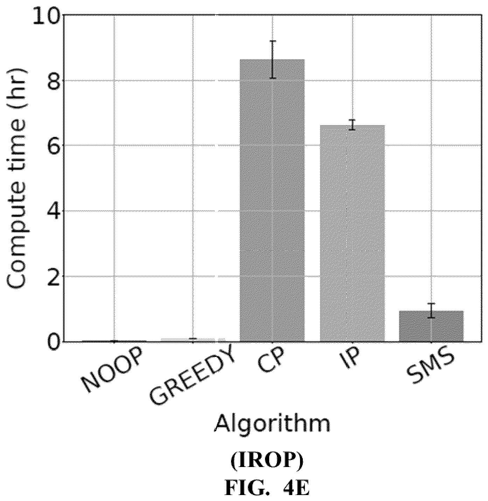

Aggregate performance: FIG. 4B and FIG. 4C show the business metrics, averaged over the evaluation scenarios, achieved by the algorithms for the BAU and IROP regimes, respectively. The X-axis shows individual components of the business metrics and their combination. The Y-axis shows the cost for each component. The following points are observed. First, NOOP in IROP is worse by 14% than NOOP in BAU in terms of the total cost, confirming that inline recovery is more important during interrupted operations. Second, the locally optimal GREEDY strategy is sub-optimal at a global level. In terms of the total cost, SMS outperforms GREEDY by 26.3% (24.7%) for BAU (IROP), confirming a need to consider higher order global effects. Third, with a timeout for decisions, for both regimes (BAU, IROP), SMS improves total cost over IP (by 17.9%, 14.1%) and CP (by 11.0%, 10.6%). FIG. 4D and FIG. 4E show the total compute time across all optimization windows, averaged over the evaluation scenarios, for each algorithm for the BAU and IROP regimes, respectively. It is found that IROP roughly takes the same time as BAU (e.g., 2% difference for IP). The simulation time (to implement the optimizer decisions) is roughly constant around 90 seconds for each algorithm. However, the decision time ranges from 60 milliseconds for GREEDY to around 9 hours for CP. For most decision windows, CP, and IP exhaust the compute timeout without reaching the optimal solution.

Optimality gap: When IP and CP are run without a timeout, they do not complete for any $H > 3$ hours even after several days of computation. For $H = 3$ hours, the SMS is observed to be within 5% of the optimal solution obtained by CP. Because $H = 3$ hours is small, SMS is about 70% faster than CP.

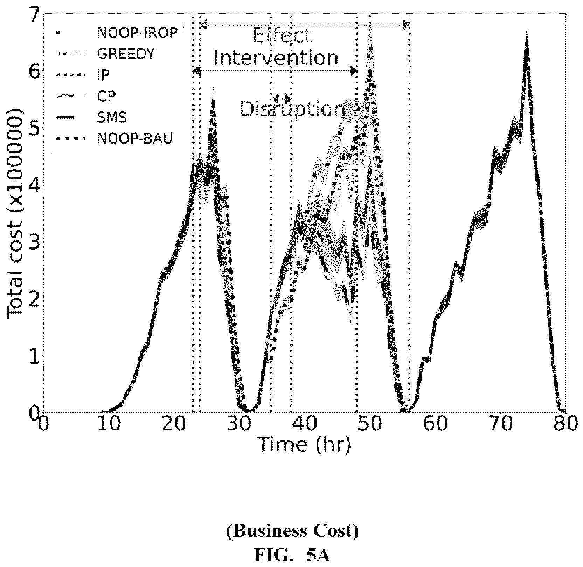

Dynamic performance: FIG. 5A shows the time evolution of the algorithms for the IROP regime. Due to the cyclical nature of airline operations, it can be seen that a cyclical behavior in the cost. The X-axis shows the hour $t$ of operation. The Y-axis shows the total cost for all flights departing between $t$ and $t+1$ hours. Each curve shows the ensemble mean over 20 evaluation scenarios and the associated error regions. SMS and other control interventions are implemented from $t = 23$ to $t = 48$ hours; and the effects are seen from $t = 24$ to $t = 56$ hours. The IROP regime commences at $t = 35$ and ends at $t = 38$ hours. The curve 'NOOP-IROP' shows the cost with these IROP and no intervention. As a counterfactual, the curve 'NOOP-BAU' shows the cost without IROP (i.e., BAU) and no intervention. NOOP-IROP and NOOP-BAU diverge around $t = 33$ hours showing the additional cost due to IROP. Till $t = 24$ hours, there is no effect of the intervention due to lead time. At $t = 24$ hours, the effect of the inline recovery algorithms kicks in; and differing performance is observed. GREEDY shows the least improvement; while SMS has the maximum improvement. Because global effects compound over time, the inability of CP/IP to compute good solutions within a timeout initially could potentially limit them to trajectories with higher cost.

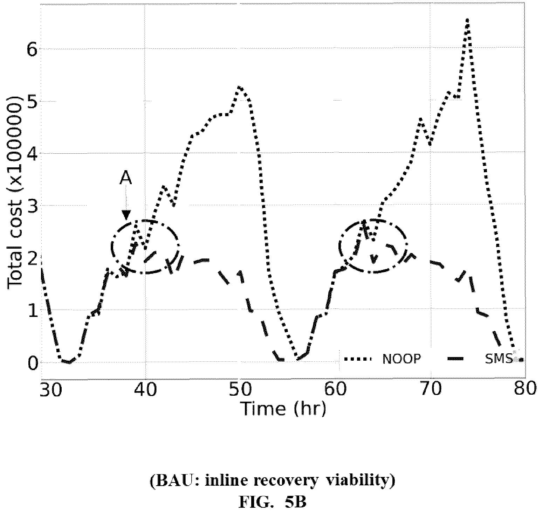

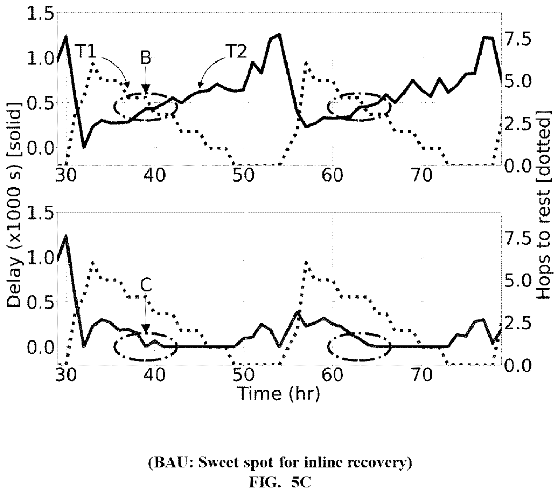

Viability of inline recovery: FIG. 5A shows that the benefits of inline recovery occur during the region marked 'Effect'. The effect is the most pronounced after the point marked A in FIG. 5B. To explain this behavior, the BAU scenario is considered with NOOP and with SMS in FIG. 5B for an extended intervention and simulation period. It can be seen that control helps only after the same phase of cyclical operations marked A in FIG. 5B. To explain this phenomenon, a metric called hops is considered to rest. Delays build up as an aircraft takes multiple hops during the day as flights across multiple airports before it goes to rest at a designated airport. A rest stop is a buffer in the schedule that is large enough to absorb any delay. Hops to rest is therefore the number of future flights an aircraft makes before resting. FIG. 5C shows the average departure delay (primary Y-axis) and average hops to rest (secondary Y-axis) as a function of the departure hour (X-axis). The top-panel shows NOOP while the bottom panel shows SMS. As an aircraft accumulates delays across flight hops, it moves closer to its rest stop, so hops to rest decrease while delay increases. Intuitively, when hops to rest is low, even a highly-delayed flight will have less global impact (trend T1). Conversely, when hops to rest is high, delays are likely so less that they will not have much global impact due to schedule buffers (trend T2). Therefore, intervention becomes viable when the opposing network effects T1 and T2 form a sweet-spot. These are exactly the points marked B for NOOP and C for SMS, which also correspond to A in FIG. 5B.

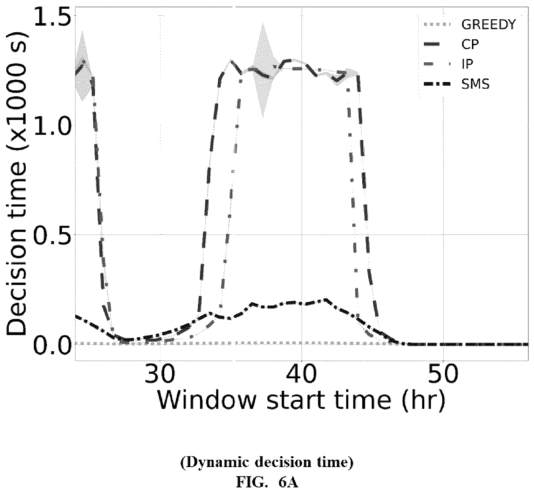

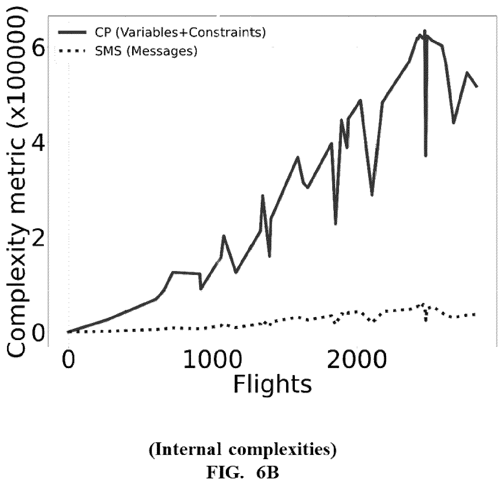

Scalability of SMS: FIG. 6A shows the decision time for each window. GREEDY and NOOP are insensitive to the number of flights because they take purely local decisions. The decision times for CP and IP increase more rapidly than SMS when the number of flights is large. This can be explained by considering the internals of the algorithms. FIG. 6B shows two curves: 1) the number of variables and constraints for CP; and 2) the number of messages exchanged by SMS. While these two are not directly comparable, it is empirically observed that SMS scales approximately linearly with increasing problem sizes (number of flights), unlike CP which scales non-linearly. This is because each flight node in the coordination graph likely has a bounded degree due to interacting edges with other flights, and thus a roughly linear upper bound on the number of edges. This explains why SMS agent of the system 100 outperforms classical optimization in compute time even while producing reasonable solutions.

Thus, the method and system disclosed herein models inline recovery for intelligent airline operations as a stochastic optimization problem that captures higher-order network-wide effects of airport-level local recovery actions. An agent-based approach is designed for integrated inline recovery in airline operations. The system exploits domain knowledge encoded as a coordination graph to achieve scale for real-time decision making. The approach disclosed herein is simulated environment calibrated with real-world airline data against several baselines for two different operating regimes: normal delays due to business as usual (BAU) and higher delays due to irregular operations (IROP) at geographically close airports.

Thus, the method and system disclosed herein provides a globally informed SMS, which outperforms a locally optimal Greedy approach by 26.3% (24.7%) in the Business as Usual - irregular operations (BAU-IROP) regime. On realistic problem instances where techniques in the literature such as constraint programming (CP) and integer (non-linear) programming IP need a timeout to complete, in the IROP regime, SMS improves over IP (CP) by 14.1% (10.6%) in business cost, and by 7x (9x) in compute time. On smaller problem instances where CP completes to optimality, SMS is within 5% of the optimal CP cost while being 70% faster. All globally informed control strategies (SMS,CP, IP) identify a sweet-spot that occurs due to the domain constraints as the result of two opposing network effects: increasing global delays and reducing global impact of delays. SMS achieves scale because 1) its complexity for the airlines domain can be approximated by a linear function of the problem size (in terms of the number of flights in the coordination graph), and 2) it handles resource constraints in a unique way through the message passing functions. CP and IP fail to scale because their constraints and variables grow non-linearly with the problem size.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200) for inline recovery of airline operations, the method comprising:

receiving (202), by a Stochastic-Minplus-with-State (SMS) agent executed by one or more hardware processors, a current state of an airline network from a digital twin of the airline network, the current state comprising a set of inherited delay of each of a plurality of flights of the airline network currently operating in a time horizon across an airspace covered by the airline network, wherein the inherited delay of each of the plurality of flights is a result of previous actions implemented for inline recovery of each of the plurality of flights;

iteratively processing (204), by the SMS agent, the current state of the airline network to generate an optimized action state vector for inline recovery of the plurality of flights in consideration with a plurality of constraints,

wherein an action state vector in each iteration is executed on the digital twin of the airline network to analyze effect of the action state vector on the plurality of flights;

wherein the SMS agent processes an undirected coordination graph with a plurality of nodes representing the plurality of flights operating in the time horizon with associated inherited delays and the plurality of nodes connected via the undirected edges between flights if at least a physical aircraft or one or more passengers are shared between the flights,

wherein the SMS agent iterates until an objective function is minimized, wherein the objective function is defined by cost incurred per missed passenger (PAX), a cost per unit of departure delay, and a cost of the intervention action for each flight among the plurality of flights, and

wherein the SMS agent utilizes a state dependent cost function comprising (i) a node cost incorporating action cost function and (ii) an edge cost function comprising delay and PAX cost, wherein state dependent cost function determines the cost per unit of departure delay, and the cost of the intervention action for each flight; and

recommending (206), by the one SMS agent executed by the one or more hardware processors, the optimized action state vector for implementing in live operations of the airline network, wherein an actual action taken by the airline network for the plurality of flights is fed back to the digital twin as the current state of the airline network.

2. The processor implemented method as claimed in claim 1, wherein the plurality of constraints comprise a set of resource constraints and a set of delay propagation constraints that further explicitly includes external noise from ground and air operations that are non-linear functions of delay.

3. The processor implemented method as claimed in claim 1, wherein the non-linear functions of delay are addressed using a sample average across forecasted optimization scenarios.

4. The processor implemented method as claimed in claim 1, wherein the method iterates over a rolling horizon, wherein the current horizon moves forward with regular time steps.

5. A system (100) for inline recovery of airline operations, the system (100) comprising:

a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
receive by a Stochastic-Minplus-with-State (SMS) agent executed by the one or more hardware processors, a current state of an airline network from a digital twin of the airline network, the current state comprising a set of inherited delay of each of a plurality of flights of the airline network currently operating in a time horizon across an airspace covered by the airline network, wherein the inherited delay of each of the plurality of flights is a result of previous actions implemented for inline recovery of each of the plurality of flights;

iteratively process by the SMS agent, the current state of the airline network to generate an optimized action state vector for inline recovery of the plurality of flights in consideration with a plurality of constraints,

wherein an action state vector in each iteration is executed on the digital twin of the airline network to analyze effect of the action state vector on the plurality of flights;
wherein the SMS agent processes an undirected coordination graph with a plurality of nodes representing the plurality of flights operating in the time horizon with associated inherited delays and the plurality of nodes connected via undirected edges between flights if at least a physical aircraft or one or more passengers are shared between the flights,

wherein the SMS agent iterates until an objective function is minimized, wherein the objective function is defined by cost incurred per missed passenger (PAX), a cost per unit of departure delay, and a cost of the intervention action for each flight among the plurality of flights, and

wherein the SMS agent utilizes a state dependent cost function comprising (i) a node cost incorporating action cost function and (ii) an edge cost function comprising delay and PAX cost, wherein state dependent cost function determines the cost per unit of departure delay, and the cost of the intervention action for each flight; and

recommend by the one SMS agent executed by the one or more hardware processors, the optimized action state vector for implementing in live operations of the airline network, wherein an actual action taken by the airline network for the plurality of flights is fed back to the digital twin as the current state of the airline network.

6. The system as claimed in claim 5, wherein the plurality of constraints comprise a set of resource constraints and a set of delay propagation constraints that further explicitly includes external noise from ground and air operations that are non-linear functions of delay.

7. The system as claimed in claim 5, wherein the non-linear functions of delay are addressed using a sample average across forecasted optimization scenarios.

8. The system as claimed in claim 5, wherein the method iterates over a rolling horizon, wherein the current horizon moves forward with regular time steps.

9. One or more non-transitory machine-readable information storage mediums comprising one or more instructions which when executed by one or more hardware processors cause:

receiving, by a Stochastic-Minplus-with-State (SMS) agent executed by one or more hardware processors, a current state of an airline network from a digital twin of the airline network, the current state comprising a set of inherited delay of each of a plurality of flights of the airline network currently operating in a time horizon across an airspace covered by the airline network, wherein the inherited delay of each of the plurality of flights is a result of previous actions implemented for inline recovery of each of the plurality of flights;

iteratively processing, by the SMS agent, the current state of the airline network to generate an optimized action state vector for inline recovery of the plurality of flights in consideration with a plurality of constraints,

wherein an action state vector in each iteration is executed on the digital twin of the airline network to analyze effect of the action state vector on the plurality of flights;

wherein the SMS agent processes an undirected coordination graph with a plurality of nodes representing the plurality of flights operating in the time horizon with associated inherited delays and the plurality of nodes connected via the undirected edges between flights if at least a physical aircraft or one or more passengers are shared between the flights,

wherein the SMS agent iterates until an objective function is minimized, wherein the objective function is defined by cost incurred per missed passenger (PAX), a cost per unit of departure delay, and a cost of the intervention action for each flight among the plurality of flights, and

wherein the SMS agent utilizes a state dependent cost function comprising (i) a node cost incorporating action cost function and (ii) an edge cost function comprising delay and PAX cost, wherein state dependent cost function determines the cost per unit of departure delay, and the cost of the intervention action for each flight; and

recommending, by the one SMS agent executed by the one or more hardware processors, the optimized action state vector for implementing in live operations of the airline network, wherein an actual action taken by the airline network for the plurality of flights is fed back to the digital twin as the current state of the airline network.

10. The one or more non-transitory machine-readable information storage mediums as claimed in claim 9, wherein the plurality of constraints comprise a set of resource constraints and a set of delay propagation constraints that further explicitly includes external noise from ground and air operations that are non-linear functions of delay.

**11.** The one or more non-transitory machine-readable information storage mediums as claimed in claim 9, wherein the non-linear functions of delay are addressed using a sample average across forecasted optimization scenarios.

**12.** The one or more non-transitory machine-readable information storage mediums as claimed in claim 9, wherein the method iterates over a rolling horizon, wherein the current horizon moves forward with regular time steps.

**Patentansprüche**

**1.** Prozessorimplementiertes Verfahren (200) zur Inline-Wiederherstellung von Fluglinienoperationen, wobei das Verfahren Folgendes umfasst:

Empfangen (202), durch einen Stochastic-Minplus-with-State (SMS)-Agenten, der von einem oder mehreren Hardwareprozessoren ausgeführt wird, eines aktuellen Zustands eines Fluglinienetzwerks von einem digitalen Zwilling des Fluglinienetzwerks, wobei der aktuelle Zustand einen Satz von vererbter Verzögerung jedes einer Mehrzahl von Flügen des Flugliniennetzwerks umfasst, die aktuell in einem Zeithorizont über einen von dem Flugliniennetzwerk abgedeckten Luftraum hinweg operieren, wobei die vererbte Verzögerung jedes der Mehrzahl von Flügen ein Ergebnis von vorherigen Aktionen ist, die zur Inline-Wiederherstellung jedes der Mehrzahl von Flügen implementiert wurden;
iteratives Verarbeiten (204), durch den SMS-Agenten, des aktuellen Zustands des Flugliniennetzwerks, um einen optimierten Aktionszustandsvektor zur Inline-Wiederherstellung der Mehrzahl von Flügen unter Berücksichtigung einer Mehrzahl von Randbedingungen zu erzeugen,

wobei ein Aktionszustandsvektor in jeder Iteration auf dem digitalen Zwilling des Flugliniennetzwerks ausgeführt wird, um die Wirkung des Aktionszustandsvektors auf die Mehrzahl von Flügen zu analysieren;
wobei der SMS-Agent einen ungerichteten Koordinationsgraphen mit einer Mehrzahl von Knoten verarbeitet, die die Mehrzahl von Flügen darstellen, die in dem Zeithorizont mit assoziierten vererbten Verzögerungen operieren, und die Mehrzahl von Knoten über die ungerichteten Kanten zwischen Flügen verbunden sind, wenn mindestens ein physisches Flugzeug oder ein oder mehrere Passagiere zwischen den Flügen geteilt werden,
wobei der SMS-Agent iteriert, bis eine Zielfunktion minimiert ist, wobei die Zielfunktion durch Kosten, die pro verpasstem Passagier anfallen (PAX), Kosten pro Einheit der Abflugverzögerung und Kosten der Interventionsaktion für jeden Flug unter der Mehrzahl von Flügen definiert ist, und
wobei der SMS-Agent eine zustandsabhängige Kostenfunktion verwendet, die (i) Knotenkosten, die eine Aktionskostenfunktion enthalten, und (ii) eine Kantenkostenfunktion, die Verzögerungs- und PAX-Kosten umfasst, umfasst, wobei die zustandsabhängige Kostenfunktion die Kosten pro Einheit der Abflugverzögerung und die Kosten der Interventionsaktion für jeden Flug bestimmt; und

Empfehlen (206), durch den einen SMS-Agenten, der durch den einen oder die mehreren Hardwareprozessoren ausgeführt wird, des optimierten Aktionszustandsvektors zum Implementieren in Live-Operationen des Flugliniennetzwerks, wobei eine tatsächliche Aktion, die durch das Flugliniennetzwerk für die Mehrzahl von Flügen ergriffen wird, an den digitalen Zwilling als den aktuellen Zustand des Flugliniennetzwerks rückgekoppelt wird.

**2.** Prozessorimplementiertes Verfahren nach Anspruch 1, wobei die Mehrzahl von Beschränkungen einen Satz von Ressourcenbeschränkungen und einen Satz von Verzögerungsausbreitungsbeschränkungen umfasst, die ferner explizit externes Rauschen von Boden- und Luftoperationen beinhalten, die nichtlineare Funktionen der Verzögerung sind.

**3.** Prozessorimplementiertes Verfahren nach Anspruch 1, wobei die nichtlinearen Funktionen der Verzögerung unter Verwendung eines Stichprobendurchschnitts über vorhergesagte Optimierungsszenarien hinweg adressiert werden.

**4.** Prozessorimplementiertes Verfahren nach Anspruch 1, wobei das Verfahren über einen rollenden Horizont iteriert, wobei sich der aktuelle Horizont mit regelmäßigen Zeitschritten vorwärts bewegt.

**5.** System (100) zur Inline-Wiederherstellung von Fluglinienoperationen, wobei das System (100) Folgendes umfasst:

einen Speicher (102), der Anweisungen speichert;

eine oder mehrere Eingabe/Ausgabe(E/A)-Schnittstellen (106); und

einen oder mehrere Hardwareprozessoren (104), die über die eine oder die mehreren E/A-Schnittstellen (106) mit dem Speicher (102) gekoppelt sind, wobei der eine oder die mehreren Hardwareprozessoren (104) durch die Anweisungen zu Folgendem konfiguriert sind:

Empfangen, durch einen Stochastic-Minplus-with-State (SMS)-Agenten, der von dem einen oder den mehreren Hardwareprozessoren ausgeführt wird, eines aktuellen Zustands eines Flugliniennetzwerks von einem digitalen Zwilling des Flugliniennetzwerks, wobei der aktuelle Zustand einen Satz von vererbter Verzögerung jedes einer Mehrzahl von Flügen des Flugliniennetzwerks umfasst, die aktuell in einem Zeithorizont über einen von dem Flugliniennetzwerk abgedeckten Luftraum hinweg operieren, wobei die vererbte Verzögerung jedes der Mehrzahl von Flügen ein Ergebnis von vorherigen Aktionen ist, die zur Inline-Wiederherstellung jedes der Mehrzahl von Flügen implementiert wurden;

iteratives Verarbeiten, durch den SMS-Agenten, des aktuellen Zustands des Flugliniennetzwerks, um einen optimierten Aktionszustandsvektor zur Inline-Wiederherstellung der Mehrzahl von Flügen unter Berücksichtigung einer Mehrzahl von Randbedingungen zu erzeugen,

wobei ein Aktionszustandsvektor in jeder Iteration auf dem digitalen Zwilling des Flugliniennetzwerks ausgeführt wird, um die Wirkung des Aktionszustandsvektors auf die Mehrzahl von Flügen zu analysieren;

wobei der SMS-Agent einen ungerichteten Koordinationsgraphen mit einer Mehrzahl von Knoten verarbeitet, die die Mehrzahl von Flügen darstellen, die in dem Zeithorizont mit assoziierten vererbten Verzögerungen operieren, und die Mehrzahl von Knoten über ungerichtete Kanten zwischen Flügen verbunden sind, wenn mindestens ein physisches Flugzeug oder ein oder mehrere Passagiere zwischen den Flügen geteilt werden,

wobei der SMS-Agent iteriert, bis eine Zielfunktion minimiert ist, wobei die Zielfunktion durch Kosten, die pro verpasstem Passagier anfallen (PAX), Kosten pro Einheit der Abflugverzögerung und Kosten der Interventionsaktion für jeden Flug unter der Mehrzahl von Flügen definiert ist, und

wobei der SMS-Agent eine zustandsabhängige Kostenfunktion verwendet, die (i) Knotenkosten, die eine Aktionskostenfunktion enthalten, und (ii) eine Kantenkostenfunktion, die Verzögerungs- und PAX-Kosten umfasst, umfasst, wobei die zustandsabhängige Kostenfunktion die Kosten pro Einheit der Abflugverzögerung und die Kosten der Interventionsaktion für jeden Flug bestimmt; und

Empfehlen, durch den einen SMS-Agenten, der durch den einen oder die mehreren Hardwareprozessoren ausgeführt wird, des optimierten Aktionszustandsvektors zum Implementieren in Live-Operationen des Flugliniennetzwerks, wobei eine tatsächliche Aktion, die durch das Flugliniennetzwerk für die Mehrzahl von Flügen ergriffen wird, an den digitalen Zwilling als den aktuellen Zustand des Flugliniennetzwerks rückgekoppelt wird.

6. System nach Anspruch 5, wobei die Mehrzahl von Beschränkungen einen Satz von Ressourcenbeschränkungen und einen Satz von Verzögerungsausbreitungsbeschränkungen umfasst, die ferner explizit externes Rauschen von Boden- und Luftoperationen beinhalten, die nichtlineare Funktionen der Verzögerung sind.

7. System nach Anspruch 5, wobei die nichtlinearen Funktionen der Verzögerung unter Verwendung eines Stichprobendurchschnitts über vorhergesagte Optimierungsszenarien hinweg adressiert werden.

8. System nach Anspruch 5, wobei das Verfahren über einen rollenden Horizont iteriert, wobei sich der aktuelle Horizont mit regelmäßigen Zeitschritten vorwärts bewegt.

9. Ein oder mehrere nichtflüchtige maschinenlesbare Informationsspeichermedien, die eine oder mehrere Anweisungen umfassen, die, wenn sie durch einen oder mehrere Hardwareprozessoren ausgeführt werden, Folgendes bewirken:

Empfangen, durch einen Stochastic-Minplus-with-State (SMS)-Agenten, der von einem oder mehreren Hardwareprozessoren ausgeführt wird, eines aktuellen Zustands eines Flugliniennetzwerks von einem digitalen Zwilling des Flugliniennetzwerks, wobei der aktuelle Zustand einen Satz von vererbter Verzögerung jedes einer Mehrzahl von Flügen des Flugliniennetzwerks umfasst, die aktuell in einem Zeithorizont über einen von dem Flugliniennetzwerk abgedeckten Luftraum hinweg operieren, wobei die vererbte Verzögerung jedes der Mehrzahl von Flügen ein Ergebnis von vorherigen Aktionen ist, die zur Inline-Wiederherstellung jedes der Mehrzahl von Flügen implementiert wurden;

iteratives Verarbeiten, durch den SMS-Agenten, des aktuellen Zustands des Flugliniennetzwerks, um einen optimierten Aktionszustandsvektor zur Inline-Wiederherstellung der Mehrzahl von Flügen unter Berücksichtigung einer Mehrzahl von Randbedingungen zu erzeugen,

wobei ein Aktionszustandsvektor in jeder Iteration auf dem digitalen Zwilling des Flugliniennetzwerks ausgeführt wird, um die Wirkung des Aktionszustandsvektors auf die Mehrzahl von Flügen zu analysieren; wobei der SMS-Agent einen ungerichteten Koordinationsgraphen mit einer Mehrzahl von Knoten verarbeitet, die die Mehrzahl von Flügen darstellen, die in dem Zeithorizont mit assoziierten vererbten Verzögerungen operieren, und die Mehrzahl von Knoten über die ungerichteten Kanten zwischen Flügen verbunden sind, wenn mindestens ein physisches Flugzeug oder ein oder mehrere Passagiere zwischen den Flügen geteilt werden,

wobei der SMS-Agent iteriert, bis eine Zielfunktion minimiert ist, wobei die Zielfunktion durch Kosten, die pro verpasstem Passagier anfallen (PAX), Kosten pro Einheit der Abflugverzögerung und Kosten der Interventionsaktion für jeden Flug unter der Mehrzahl von Flügen definiert ist, und

wobei der SMS-Agent eine zustandsabhängige Kostenfunktion verwendet, die (i) Knotenkosten, die eine Aktionskostenfunktion enthalten, und (ii) eine Kantenkostenfunktion, die Verzögerungs- und PAX-Kosten umfasst, umfasst, wobei die zustandsabhängige Kostenfunktion die Kosten pro Einheit der Abflugverzögerung und die Kosten der Interventionsaktion für jeden Flug bestimmt; und

Empfehlen, durch den einen SMS-Agenten, der durch den einen oder die mehreren Hardwareprozessoren ausgeführt wird, des optimierten Aktionszustandsvektors zum Implementieren in Live-Operationen des Flugliniennetzwerks, wobei eine tatsächliche Aktion, die durch das Flugliniennetzwerk für die Mehrzahl von Flügen ergriffen wird, an den digitalen Zwilling als den aktuellen Zustand des Flugliniennetzwerks rückgekoppelt wird.

10. Ein oder mehrere nichtflüchtige maschinenlesbare Informationsspeichermedien nach Anspruch 9, wobei die Mehrzahl von Beschränkungen einen Satz von Ressourcenbeschränkungen und einen Satz von Verzögerungsausbreitungsbeschränkungen umfasst, die ferner explizit externes Rauschen von Boden- und Luftoperationen beinhalten, die nichtlineare Funktionen der Verzögerung sind.

11. Ein oder mehrere nichtflüchtige maschinenlesbare Informationsspeichermedien nach Anspruch 9, wobei die nichtlinearen Funktionen der Verzögerung unter Verwendung eines Stichprobendurchschnitts über vorhergesagte Optimierungsszenarien hinweg adressiert werden.

12. Ein oder mehrere nichtflüchtige maschinenlesbare Informationsspeichermedien nach Anspruch 9, wobei das Verfahren über einen rollenden Horizont iteriert, wobei sich der aktuelle Horizont mit regelmäßigen Zeitschritten vorwärts bewegt.

## Revendications

1. Procédé mis en œuvre par processeur (200) pour la récupération en ligne d'opérations de compagnie aérienne, le procédé comprenant :

la réception (202), par un agent Minplus stochastique avec état (SMS) exécuté par un ou plusieurs processeurs matériels, d'un état actuel d'un réseau de compagnie aérienne à partir d'un jumeau numérique du réseau de compagnie aérienne, l'état actuel comprenant un ensemble de retards hérités de chacun d'une pluralité de vols du réseau de compagnie aérienne fonctionnant actuellement dans un horizon temporel à travers un espace aérien couvert par le réseau de compagnie aérienne, dans lequel le retard hérité de chacun de la pluralité de vols est un résultat d'actions précédentes mises en œuvre pour la récupération en ligne de chacun de la pluralité de vols ;

le traitement itératif (204), par l'agent SMS, de l'état actuel du réseau de compagnie aérienne pour générer un vecteur d'état d'action optimisé pour la récupération en ligne de la pluralité de vols en considération avec une pluralité de contraintes,

dans lequel un vecteur d'état d'action dans chaque itération est exécuté sur le jumeau numérique du réseau de compagnie aérienne pour analyser l'effet du vecteur d'état d'action sur la pluralité de vols ;

dans lequel l'agent SMS traite un graphe de coordination non dirigé avec une pluralité de noeuds représentant la pluralité de vols fonctionnant dans l'horizon temporel avec des retards hérités associés et la pluralité de noeuds connectés via les bords non dirigés entre les vols si au moins un aéronef physique ou un ou plusieurs passagers sont partagés entre les vols,

dans lequel l'agent SMS itère jusqu'à ce qu'une fonction objective soit minimisée, dans lequel la fonction objective est définie par un coût encouru par passager manqué (PAX), un coût par unité de retard de départ, et un coût de l'action d'intervention pour chaque vol parmi la pluralité de vols, et

dans lequel l'agent SMS utilise une fonction de coût dépendant de l'état comprenant (i) un coût de noeud incorporant une fonction de coût d'action et (ii) une fonction de coût de bord comprenant un retard et un coût PAX, dans lequel la fonction de coût dépendant de l'état détermine le coût par unité de retard de départ, et le coût de l'action d'intervention pour chaque vol ; et

la recommandation (206), par l'agent SMS exécuté par les un ou plusieurs processeurs matériels, du vecteur d'état d'action optimisé pour la mise en œuvre dans des opérations en temps réel du réseau de compagnie aérienne, dans lequel une action réelle prise par le réseau de compagnie aérienne pour la pluralité de vols est renvoyée au jumeau numérique en tant qu'état actuel du réseau de compagnie aérienne.

2. Procédé mis en œuvre par processeur selon la revendication 1, dans lequel la pluralité de contraintes comprend un ensemble de contraintes de ressources et un ensemble de contraintes de propagation de retard qui inclut en outre explicitement un bruit externe provenant d'opérations au sol et aériennes qui sont des fonctions non linéaires de retard.

3. Procédé mis en œuvre par processeur selon la revendication 1, dans lequel les fonctions non linéaires de retard sont adressées en utilisant une moyenne d'échantillon à travers des scénarios d'optimisation prévus.

4. Procédé mis en œuvre par processeur selon la revendication 1, dans lequel le procédé itère sur un horizon glissant, dans lequel l'horizon actuel avance avec des pas de temps réguliers.

5. Système (100) pour la récupération en ligne d'opérations de compagnie aérienne, le système (100) comprenant :

une mémoire (102) stockant des instructions ;
une ou plusieurs interfaces d'entrée/sortie (E/S) (106) ; et
un ou plusieurs processeurs matériels (104) couplés à la mémoire (102) via les une ou plusieurs interfaces E/S (106), dans lequel les un ou plusieurs processeurs matériels (104) sont configurés par les instructions pour :
recevoir, par un agent Minplus stochastique avec état (SMS) exécuté par les un ou plusieurs processeurs matériels, un état actuel d'un réseau de compagnie aérienne à partir d'un jumeau numérique du réseau de compagnie aérienne, l'état actuel comprenant un ensemble de retards hérités de chacun d'une pluralité de vols du réseau de compagnie aérienne fonctionnant actuellement dans un horizon temporel à travers un espace aérien couvert par le réseau de compagnie aérienne, dans lequel le retard hérité de chacun de la pluralité de vols est un résultat d'actions précédentes mises en œuvre pour la récupération en ligne de chacun de la pluralité de vols ;

traiter itérativement, par l'agent SMS, l'état actuel du réseau de compagnie aérienne pour générer un vecteur d'état d'action optimisé pour la récupération en ligne de la pluralité de vols en considération avec une pluralité de contraintes,

dans lequel un vecteur d'état d'action dans chaque itération est exécuté sur le jumeau numérique du réseau de compagnie aérienne pour analyser l'effet du vecteur d'état d'action sur la pluralité de vols ;
dans lequel l'agent SMS traite un graphe de coordination non dirigé avec une pluralité de noeuds représentant la pluralité de vols fonctionnant dans l'horizon temporel avec des retards hérités associés et la pluralité de noeuds connectés via des bords non dirigés entre les vols si au moins un aéronef physique ou un ou plusieurs passagers sont partagés entre les vols,
dans lequel l'agent SMS itère jusqu'à ce qu'une fonction objective soit minimisée, dans lequel la fonction objective est définie par un coût encouru par passager manqué (PAX), un coût par unité de retard de départ, et un coût de l'action d'intervention pour chaque vol parmi la pluralité de vols, et
dans lequel l'agent SMS utilise une fonction de coût dépendant de l'état comprenant (i) un coût de noeud incorporant une fonction de coût d'action et (ii) une fonction de coût de bord comprenant un retard et un coût PAX, dans lequel la fonction de coût dépendant de l'état détermine le coût par unité de retard de départ, et le coût de l'action d'intervention pour chaque vol ; et

recommander, par l'agent SMS exécuté par les un ou plusieurs processeurs matériels, le vecteur d'état d'action optimisé pour la mise en œuvre dans des opérations en temps réel du réseau de compagnie aérienne, dans lequel une action réelle prise par le réseau de compagnie aérienne pour la pluralité de vols est renvoyée au jumeau numérique en tant qu'état actuel du réseau de compagnie aérienne.

6. Système selon la revendication 5, dans lequel la pluralité de contraintes comprend un ensemble de contraintes de ressources et un ensemble de contraintes de propagation de retard qui inclut en outre explicitement un bruit externe provenant d'opérations au sol et aériennes qui sont des fonctions non linéaires de retard.

7. Système selon la revendication 5, dans lequel les fonctions non linéaires de retard sont adressées en utilisant une moyenne d'échantillon à travers des scénarios d'optimisation prévus.

8. Système selon la revendication 5, dans lequel le procédé itère sur un horizon glissant, dans lequel l'horizon actuel avance avec des pas de temps réguliers.

9. Un ou plusieurs supports de stockage d'informations lisibles par machine non transitoires comprenant une ou plusieurs instructions qui, lorsqu'elles sont exécutées par un ou plusieurs processeurs matériels, amènent :

la réception, par un agent Minplus stochastique avec état (SMS) exécuté par un ou plusieurs processeurs matériels, d'un état actuel d'un réseau de compagnie aérienne à partir d'un jumeau numérique du réseau de compagnie aérienne, l'état actuel comprenant un ensemble de retards hérités de chacun d'une pluralité de vols du réseau de compagnie aérienne fonctionnant actuellement dans un horizon temporel à travers un espace aérien couvert par le réseau de compagnie aérienne, dans lequel le retard hérité de chacun de la pluralité de vols est un résultat d'actions précédentes mises en œuvre pour la récupération en ligne de chacun de la pluralité de vols ;
le traitement itératif, par l'agent SMS, de l'état actuel du réseau de compagnie aérienne pour générer un vecteur d'état d'action optimisé pour la récupération en ligne de la pluralité de vols en considération avec une pluralité de contraintes,

dans lequel un vecteur d'état d'action dans chaque itération est exécuté sur le jumeau numérique du réseau de compagnie aérienne pour analyser l'effet du vecteur d'état d'action sur la pluralité de vols ;
dans lequel l'agent SMS traite un graphe de coordination non dirigé avec une pluralité de noeuds représentant la pluralité de vols fonctionnant dans l'horizon temporel avec des retards hérités associés et la pluralité de noeuds connectés via les bords non dirigés entre les vols si au moins un aéronef physique ou un ou plusieurs passagers sont partagés entre les vols,
dans lequel l'agent SMS itère jusqu'à ce qu'une fonction objective soit minimisée, dans lequel la fonction objective est définie par un coût encouru par passager manqué (PAX), un coût par unité de retard de départ, et un coût de l'action d'intervention pour chaque vol parmi la pluralité de vols, et
dans lequel l'agent SMS utilise une fonction de coût dépendant de l'état comprenant (i) un coût de noeud incorporant une fonction de coût d'action et (ii) une fonction de coût de bord comprenant un retard et un coût PAX, dans lequel la fonction de coût dépendant de l'état détermine le coût par unité de retard de départ, et le coût de l'action d'intervention pour chaque vol ; et

la recommandation, par l'agent SMS exécuté par les un ou plusieurs processeurs matériels, du vecteur d'état d'action optimisé pour la mise en œuvre dans des opérations en temps réel du réseau de compagnie aérienne, dans lequel une action réelle prise par le réseau de compagnie aérienne pour la pluralité de vols est renvoyée au jumeau numérique en tant qu'état actuel du réseau de compagnie aérienne.

10. Un ou plusieurs supports de stockage d'informations lisibles par machine non transitoires selon la revendication 9, dans lequel la pluralité de contraintes comprend un ensemble de contraintes de ressources et un ensemble de contraintes de propagation de retard qui inclut en outre explicitement un bruit externe provenant d'opérations au sol et aériennes qui sont des fonctions non linéaires de retard.

11. Un ou plusieurs supports de stockage d'informations lisibles par machine non transitoires selon la revendication 9, dans lequel les fonctions non linéaires de retard sont adressées en utilisant une moyenne d'échantillon à travers des scénarios d'optimisation prévus.

12. Un ou plusieurs supports de stockage d'informations lisibles par machine non transitoires selon la revendication 9, dans lequel le procédé itère sur un horizon glissant, dans lequel l'horizon actuel avance avec des pas de temps réguliers.

FIG. 1A

**System 100**
**(Digital twin with Stochastic Minplus**
**with State**
**(SMS) agent)**

Recommended recovery actions

$$\mathbf{a}_t^*$$

Optimized action state vector

$$[t+L, t+L+H]$$

Live airline operations

Modeled state

$$\mathbf{s}_t$$

Forecasted airline state

$$t \leftarrow t + \delta$$

Known airline state

FIG. 1B

System**100**

Processor(s)
**104**

I/O Interface(s)
**106**

Memory **102**

Database **108**

Modules **110**
(Digital twin, SMS agent)

**FIG. 1C**

200

receive by a Stochastic-Minplus-with-State agent, a current state of an airline network from a digital twin of the airline network, the current state comprising a set of inherited delay of each of a plurality of flights of the airline network currently operating in a time horizon across an airspace covered by the airline network, wherein the inherited delay of each of the plurality of flights is a result of previous actions implemented for inline recovery of each of the plurality of flights — 202

iteratively process by the SMS agent, the current state of the airline network to generate an optimized action state vector for inline recovery of the plurality of flights in consideration with a plurality of constraints, wherein
an action state vector in each iteration is executed on the digital twin of the airline network to analyze effect of the action state vector on the plurality of flights;
the SMS agent iterates until an objective function is minimized, wherein the objective function is defined by cost incurred per missed passenger (PAX), a cost per unit of departure delay, and a cost of the intervention action for each flight among the plurality of flights, and
the SMS agent utilizes a state dependent cost function comprising (i) a node cost incorporating action cost function and (ii) an edge cost function comprising delay and PAX cost, wherein state dependent cost function determines the cost per unit of departure delay, and the cost of the intervention action for each flight — 204

A

**FIG. 2A**

A

recommend by the one SMS agent executed by the one or more hardware processors, the optimized action state vector for implementing in live operations of the airline network, wherein an actual action taken by the airline network for the plurality of flights is fed back to the digital twin as the current state of the airline network

206

**FIG. 2B**

**FIG. 3**

( Choice of Horizon (H)
FIG. 4A

(BAU)

FIG. 4B

(IROP)

FIG. 4C

(BAU)

**FIG. 4D**

(IROP)
FIG. 4E

(Business Cost)
FIG. 5A

(BAU: inline recovery viability)

FIG. 5B

(BAU: Sweet spot for inline recovery)

FIG. 5C

(Dynamic decision time)
FIG. 6A

(Internal complexities)

FIG. 6B

**EP 4 592 915 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421004633